# EUROPÄISCHE PATENTSCHRIFT

(11) **EP 0 976 083 B1**
(45) Veröffentlichungstag und Bekanntmachung des Hinweises auf die Patenterteilung: **16.01.2002**
(21) Anmeldenummer: 98931950.4
(22) Anmeldetag: 20.04.1998
(51) Int. Cl.: G06K 7/00

(54) **CHIPKARTEN-LESEVORRICHTUNG**
DEVICE FOR READING CHIP CARDS
DISPOSITIF DE LECTURE DE CARTES A PUCE

(30) Priorität: 18.04.1997 DE 19716357
(43) Veröffentlichungstag der Anmeldung: 02.02.2000
(73) Patentinhaber: Schneider, Robert, 85276 Pfaffenhofen (DE)
(72) Erfinder: NEIFER, Wolfgang, D-85354 Freising (DE)
(74) Vertreter: Kiessling, Christian
(86) Internationale Anmeldenummer: DE9801095
(87) Internationale Veröffentlichungsnummer: WO9848367

(56) Entgegenhaltungen:
- EP-A- 0 696 010
- GB-A- 2 298 743
- US-A- 5 490 792

## Beschreibung

Die Erfindung betrifft eine Vorrichtung zum Lesen von Chipkarten, mit mindestens einem eine Chipkarte aufnehmenden Kanal, der mindestens einen Lesekopf aufweist, wobei die Vorrichtung in einen zur Aufnahme von Modulen vorgesehenen Aufnahmeschacht eines Computers lösbar einschiebbar ist, wobei in dem Kanal zur Aufnahme mindestens einer Chipkarte zwei hintere Begrenzungswände in zwei unterschiedlichen Ebenen vorgesehen sind, die in jeweils unterschiedlichem Abstand von der Öffnung des Kanals angeordnet sind, so daß zwei direkt übereinander angeordnete Chipkarten unterschiedlich weit in den Kanal einschiebbar sind.

Im Stand der Technik ist eine Mehrzahl unterschiedlicher Chipkarten bekannt, die für Kreditzwecke, zum Telefonieren oder für Sicherheitsaufgaben und Informationsübermittlungen verwendet werden. Die Chipkarten haben meist das übliche Kreditkartenstandardformat und werden in Chipkartenleser unterschiedlichster Bauformen eingelesen. Zu diesem Zweck sind separate Chipkartenleser bekannt, die in einen Aufnahmeschacht eines Computer einschiebbar sind, um Daten der Chipkarte in den Computer zu übertragen. Für diverse Applikationen ist es jedoch notwendig oder vorteilhaft, zwei separate Chipkarten mit einem Computer zu verbinden, wobei auch eine Verbindung zwischen den jeweiligen Chipkarten herstellbar ist.

Aus EP 0 696 010 A1 ist es bekannt, mit einem Chipkartenleser gleichzeitig zwei Chipkarten zu verwenden, die unterschiedlich tief in den Chipkartenleser einsteckbar sind. Die beiden Chipkarten sind dabei auch in einen gemeinsamen Aufnahmekanal einschiebbar, in dem ein Vorsprung vorgesehen ist, der eine definierte Positionierung der Karten innerhalb des Aufnahmekanals bewirkt. Dabei kann es jedoch vorkommen, daß sich eine zuerst eingeschobene Karte an dem Vorsprung verhakt, wodurch der Einschiebevorgang erschwert sein kann.

Aus der GB 2 298 743 A ist eine Chipkarten-Lesevorrichtung der eingangsgenannten Art bekannt. Auch bei dieser bekannten Vorrichtung ist jedoch bei einem Einführen einer einzelnen Chipkarte in den ihr zugeordneten Kanal stets die Möglichkeit gegeben, daß sich die Chipkarte an dem Vorsprung bzw. an der der Schulter der für eine andere Chipkarte vorgesehenen Begrenzungswand verfängt, wodurch sich ein Einschiebevorgang als mühsam und langwierig erweisen kann und die Chipkarte beschädigt werden kann.

Aufgabe der Erfindung ist es, eine Chipkarten-Lesevorrichtung zu schaffen, mit der ein Einschieben zweier Chipkarten in einen Aufnahmekanal auf einfache Weise ermöglicht ist.

Erfindungsgemäß wird diese Aufgabe gelöst durch eine Vorspanneinrichtung, die so vorgespannt ist, daß die untere der beiden Chipkarten beim Einführen in die leere Vorrichtung in Richtung aus der Ebene der oberen der zwei unterschiedlichen Ebenen heraus in die untere Ebene gedrückt wird, wobei die Vorspanneinrichtung an der oberen Begrenzungswand der oberen der zwei unterschiedlichen Ebenen angeordnet ist.

Bevorzugte Ausgestaltungen der Erfindung sind Gegenstand der Unteransprüche.

Bei der erfindungsgemäßen Vorrichtung wird durch das Vorsehen eines Kanals mit zwei hinteren Begrenzungswänden, die in zwei unterschiedlichen Ebenen mit jeweils unterschiedlichem Abstand von der Öffnung des Kanals angeordnet sind, erreicht, daß die Chips zweier in die Lesevorrichtung eingeschobener Chipkarten voneinander so weit versetzt in ihrer jeweiligen Endposition, in der sie an die jeweilige Begrenzungswand des Kanals angrenzen, zu liegen kommen, daß sie jeweils mit einem oberhalb einer Chipkarte angeordneten Lesekopf kontaktierbar sind. Gleichzeitig ist durch den Umstand, daß die beiden Chipkarten in in der Lesevorrichtung eingeschobener Lage nach außen unterschiedliche weit aus der Lesevorrichtung hervorstehen sichergestellt, daß mindestens eine der beiden Chipkarten auch in eingeschobener Lage erkennbar und identifizierbar bleibt.

Durch das Merkmal, daß eine Vorspanneinrichtung vorgesehen ist, die so vorgespannt ist, daß die untere der beiden Chipkarten beim Einführen in die leere Vorrichtung in Richtung aus der Ebene der oberen der zwei unterschiedlichen Ebenen heraus in die untere Ebene gedrückt wird, wobei die Vorspanneinrichtung an der oberen Begrenzungswand der oberen der zwei unterschiedlichen Ebenen angeordnet ist, wird dabei quintessentiell erreicht, daß eine Vorrichtung geschaffen ist, bei der durch die Wirkung der Vorspanneinrichtung verhindert ist, daß eine einzelne Chipkarte, die in den Kanal zur Aufnahme mindestens einer Chipkarte eingeschoben wird, in Angrenzung an die falsche der zwei hintere Begrenzungswände gelangt, die in zwei unterschiedlichen Ebenen in jeweils unterschiedlichem Abstand von der Öffnung des Kanals angeordnet sind.

Gemäß einer bevorzugten Ausführungsform der erfindungsgemäßen Lesevorrichtung ist eine Vorspanneinrichtung vorgesehen, die so vorgespannt ist, daß die untere der beiden Chipkarten beim Einführen in die leere Vorrichtung in Richtung aus der Ebene der oberen der zwei unterschiedlichen Ebenen heraus in die untere Ebene gedrückt wird. Alternativ ist erfindungsgemäß eine Vorspanneinrichtung vorgesehen ist, die so vorgespannt ist, daß die obere der beiden Chipkarten beim Einführen in die leere Vorrichtung in Richtung aus der Ebene der unteren der zwei unterschiedlichen Ebenen heraus in die obere Ebene gedrückt wird. Dadurch wird erreicht, daß in der erfindungsgemäßen Lesevorrichtung sowohl nur eine Chipkarte als auch zwei Chipkarten gleichzeitig gelesen werden können.

Ist eine Vorspanneinrichtung vorgesehen, die so vorgespannt ist, daß die untere der beiden Chipkarten beim Einführen in die leere Vorrichtung in Richtung aus der Ebene der oberen der zwei unterschiedlichen Ebenen heraus in die untere Ebene gedrückt wird, so ist die Vorspanneinrichtung vorzugsweise an der oberen Begrenzungswand der oberen der zwei unterschiedlichen Ebenen angeordnet ist. Die Vorspanneinrichtung der erfindungsgemäßen Lesevorrichtung ist in diesem Fall vorzugsweise eine Blattfeder ist, deren beide Enden an die obere Begrenzungswand der oberen der zwei unterschiedlichen Ebenen angrenzen.

Durch diese Maßnahme wird erreicht, daß die Vorspanneinrichtung jeweils an einer Stelle angeordnet ist, von der aus sie direkt in Richtung der Position wirkt, in die eine jeweils zuerst eingeführte Chipkarte geführt werden soll.

Gemäß dieser Ausführungsform ist die erfindungsgemäße Lesevorrichtung so ausgestaltet, daß in eingeschobenem Zustand nur der unteren Chipkarte der Chip dieser Chipkarte mit nur einem ersten Lesekopf kontaktiert. In eingeschobenem Zustand beider Chipkarten kontaktier gemäß dieser Ausführungsform der Chip der unteren Chipkarte mit nur dem ersten Lesekopf, und der Chip der oberen Chipkarte kontaktiert nur mit einem zweiten Lesekopf, wobei die Leseköpfe entsprechend dem Abstand der beiden in unterschiedlichen Ebenen angeordneten hinteren Begrenzungswände voneinander beabstandet sind.

Ist hingegen eine Vorspanneinrichtung vorgesehen, die so vorgespannt ist, daß die untere der beiden Chipkarten beim Einführen in die leere Vorrichtung in Richtung aus der Ebene der oberen der zwei unterschiedlichen Ebenen heraus in die untere Ebene gedrückt wird, so ist die Vorspanneinrichtung vorzugsweise an der unteren Begrenzungswand der unteren der zwei unterschiedlichen Ebenen angeordnet ist. Die Vorspanneinrichtung der erfindungsgemäßen Lesevorrichtung ist in diesem Fall vorzugsweise eine Blattfeder ist, deren beide Enden an die untere Begrenzungswand der unteren der zwei unterschiedlichen Ebenen angrenzen.

Auch durch diese Maßnahme wird erreicht, daß die Vorspanneinrichtung jeweils an einer Stelle angeordnet ist, von der aus sie direkt in Richtung der Position wirkt, in die eine jeweils zuerst eingeführte Chipkarte geführt werden soll.

Gemäß dieser Ausführungsform ist die erfindungsgemäße Lesevorrichtung so ausgestaltet, daß in eingeschobenem Zustand nur der oberen Chipkarte der Chip dieser Chipkarte mit nur einem ersten Lesekopf kontaktiert. In eingeschobenem Zustand beider Chipkarten kontaktier gemäß dieser Ausführungsform der Chip der oberen Chipkarte mit nur dem ersten Lesekopf, und der Chip der unteren Chipkarte kontaktiert nur mit einem zweiten Lesekopf, wobei die Leseköpfe entsprechend dem Abstand der beiden in unterschiedlichen Ebenen angeordneten hinteren Begrenzungswände voneinander beabstandet sind.

Die erfindungsgemäße Vorrichtung weist in ihrem vorderen Bereich vorzugsweise zwei Zentrierungselemente zum Positionieren der Betriebsposition der Chipkarte in der Lesevorrichtung auf. Die Zentrierungselemente können dabei gradlinig ausgebildet sein, oder sie können entsprechend dem Krümmungsradius der Ecken einer ISO-IC-Karte gebogen ausgebildet sein. Dadurch wird ein sicheres Positionieren der jeweiligen Chipkarten in ihrer Betriebsposition erreicht.

Bei der erfindungsgemäßen Lesevorrichtung kann ein Einführen der mindestens einen Chipkarte in die Vorrichtung dadurch erleichtert sein, daß an den Seitenflächen der Vorrichtung Führungsbänder vorgesehen sind, die eine Führung der Chipkarte in dem Kanal und eine Führung der Vorrichtung in dem Aufnahmeschacht bewirken.

Alternativ kann ein Einführen der mindestens einen Chipkarte in die Lesevorrichtung dadurch erleichtert sein, daß die Vorrichtung einem vorderen Bereich aufweist, der in den Aufnahmeschacht eines Computers einschiebbar ist, und einen hinteren Bereich aufweist, der kürzer als der vordere Bereich ist, wobei Höhe und Breite des hinteren Bereichs jeweils größer als diejenigen der Aufnahmeschachtes des Computers sind, und wobei in dem hinteren Bereich eine Führung für in den ersten Teil einzuschiebende Chipkarten vorgesehen ist.

Die erfindungsgemäße Chipkarten-Lesevorrichtung wird im folgenden anhand einer bevorzugten Ausführungsform erläutert, die in der Figur der Zeichnung dargestellt ist. Darin zeigt:

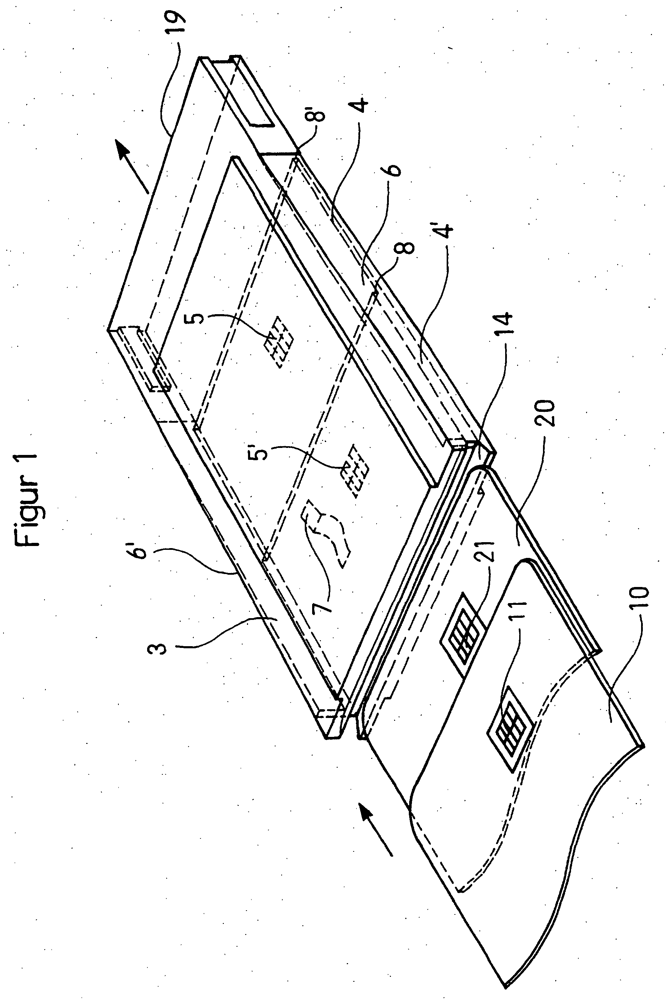

- Fig. 1: eine Ausführungsform zum Einführen von zwei Chipkarten der erfindungsgemäßen Lesevorrichtung in einer Ansicht von schräg oben.

Bei der in Fig. 2 dargestellten erfindungsgemäßen Chipkarten-Lesevorrichtung 3 sind zwei Chipkarten 10, 20 in die Eingangsöffnung 14 eines Kanals 4, 4' einführbar, wobei die Chipkarten 10, 20 in eingeführtem Zustand direkt übereinander in dem Kanal 4, 4' zu liegen kommen. Der Kanal 4, 4' weist dabei in zwei unterschiedlichen Ebenen zwei jeweilige hintere Begrenzungswände 8, 8' auf, die in unterschiedlichem Abstand von der Eingangsöffnung 14 des Kanals 4 angeordnet sind, so dass die beiden Chipkarten 10, 20 jeweils unterschiedlich weit in den Kanal 4 einschiebbar sind. In eingeschobenem Zustand der Chipkarte 20 kontaktiert der Chip 21 mit einem Lesekopf 5, wobei bei gleichzeitig eingeschobener Chipkarte 10 der Chip 11 mit dem Lesekopf 5' kontaktiert. An der oberen Begrenzungswand des Kanals 4' ist eine Blattfeder 7 vorgesehen, die bewirkt, dass die Chipkarte 20 beim Einführen in die leere Lesevorrichtung 3 in Richtung von der Begrenzungswand 8 fort in .Richtung des Kanals 4 gedrückt wird. Während eines Einschiebevorgangs werden die jeweiligen Chipkarten 10, 20 seitlich von Bändern 6, 6' geführt, die an den Seitenflächen der Lesevorrichtung 3 angeordnet sind und sich bis zu etwa 3/4 der Länge der Seitenflächen der Lesevorrichtung erstrecken. Die Bänder 6, 6' bewirken darüber hinaus ein sicheres Einführen der Lesevorrichtung 3 in einen nicht dargestellten Aufnahmeschacht eines Computers.

## Patentansprüche

1. Vorrichtung zum Lesen von Chipkarten (3), mit mindestens einem eine Chipkarte aufnehmenden Kanal (4, 4'), der mindestens einen Lesekopf (5) aufweist, wobei die Vorrichtung in einen zur Aufnahme von Modulen vorgesehenen Aufnahmeschacht eines Computers lösbar einschiebbar ist, wobei in dem Kanal (4, 4') zur Aufnahme mindestens einer Chipkarte (10, 20) zwei hintere Begrenzungswände (8, 8') in zwei unterschiedlichen Ebenen vorgesehen sind, die in jeweils unterschiedlichem Abstand von der Öffnung des Kanals (4, 4') angeordnet sind, so dass zwei direkt übereinander angeordnete Chipkarten (10, 20) unterschiedlich weit in den Kanal (4, 4') einschiebbar sind, **gekennzeichnet durch** eine Vorspanneinrichtung, die so vorgespannt ist, dass die untere der beiden Chipkarten (10, 20) beim Einführen in die leere Vorrichtung in Richtung aus der Ebene der oberen der zwei unterschiedlichen Ebenen heraus in die untere Ebene gedrückt wird, wobei die Vorspanneinrichtung an der oberen Begrenzungswand der oberen der zwei unterschiedlichen Ebenen angeordnet ist.

2. Vorrichtung nach Anspruch 1, **dadurch gekennzeichnet, dass** die Vorspanneinrichtung eine Blattfeder (7) ist, deren beide Enden an die obere Begrenzungswand der oberen der zwei unterschiedlichen Ebenen angrenzen.

3. Vorrichtung nach einem der vorhergehenden Ansprüche, **dadurch gekennzeichnet, dass** in eingeschobenem Zustand nur der unteren Chipkarte (20) der Chip (21) dieser Chipkarte mit nur einem ersten Lesekopf (5) kontaktiert.

4. Vorrichtung nach einem der vorhergehenden Ansprüche, **dadurch gekennzeichnet, dass** in eingeschobenem Zustand beider Chipkarten (10, 20) der Chip (21) der unteren Chipkarte (20) mit nur einem ersten Lesekopf (5) kontaktiert und der Chip (11) der oberen Chipkarte (10) nur mit einem zweiten Lesekopf (5') kontaktiert, wobei die Leseköpfe (5, 5') entsprechend dem Abstand der beiden in unterschiedlichen Ebenen angeordneten hinteren Begrenzungswände (8, 8') voneinander beabstandet sind.

5. Vorrichtung nach einem der vorhergehenden Ansprüche, **dadurch gekennzeichnet, dass** in eingeschobenem Zustand nur der oberen Chipkarte (10) der Chip (11) dieser Chipkarte mit nur einem ersten Lesekopf (5) kontaktiert.

6. Vorrichtung nach einem der vorhergehenden Ansprüche, **dadurch gekennzeichnet, dass** in eingeschobenem Zustand beider Chipkarten (10, 20) der Chip (11) der oberen Chipkarte (10) mit nur einem ersten Lesekopf (5) kontaktiert und der Chip (21) der unteren Chipkarte (20) nur mit einem zweiten Lesekopf (5') kontaktiert, wobei die Leseköpfe (5, 5') entsprechend dem Abstand der beiden in unterschiedlichen Ebenen angeordneten hinteren Begrenzungswände (8, 8') voneinander beabstandet sind.

7. Vorrichtung nach einem der vorhergehenden Ansprüche, **dadurch gekennzeichnet, dass** jeweils zwei Zentrierungselemente zum Positionieren der Betriebsposition der jeweiligen Chipkarten (10, 20) an den beiden in zwei unterschiedlichen Ebenen angeordneten hinteren Begrenzungswände (8, 8') vorgesehen sind.

8. Vorrichtung nach Anspruch 7, **dadurch gekennzeichnet, dass** die Zentrierungselemente gradlinig ausgebildet sind.

9. Vorrichtung nach Anspruch 7, **dadurch gekennzeichnet, dass** die Zentrierungselemente entsprechend dem Krümmungsradius der Ecken einer ISO-IC-Karte gebogen ausgebildet sind.

10. Vorrichtung nach einem der vorhergehenden Ansprüche, **dadurch gekennzeichnet, dass** an den Seitenflächen der Vorrichtung Führungsbänder vorgesehen sind, die eine Führung der Chipkarte in dem Kanal (4, 4') und eine Führung der Vorrichtung in dem Aufnahmeschacht bewirken.

11. Vorrichtung nach einem der Ansprüche 1 bis 9, **dadurch gekennzeichnet, dass** die Vorrichtung einem vorderen Bereich aufweist, der in den Aufnahmeschacht eines Computers einschiebbar ist, und einen hinteren Bereich aufweist, der kürzer als der vordere Bereich ist, wobei Höhe und Breite des hinteren Bereichs jeweils größer als diejenigen der Aufnahmeschachtes des Computers sind, und wobei in dem hinteren Bereich eine Führung für in den ersten Teil einzuschiebende Chipkarten (10, 20) vorgesehen ist.

## Claims

1. An apparatus for reading chip cards (3), with at least one channel (4, 4') receiving a chip card and having at least one read head (5), the apparatus being detachably insertable into a receiving shaft intended for receiving modules in a computer, whereby in the channel (4, 4') for receiving at least one chip card (10, 20) two back limiting walls (8, 8') are provided in two different planes which are disposed at different distances from the opening of the channel (4, 4') so that two chip cards (10, 20) disposed directly one above the other are insertable into the channel (4, 4') by different lengths, **characterized by** a prestressing device which is so prestressed that upon insertion into the empty apparatus the lower of the two chip cards (10, 20) is pressed into the lower plane in the direction out of the plane of the upper of the two different planes, the prestressing device being disposed on the upper limiting wall of the upper of the two different planes.

2. An apparatus according to claim 1, **characterized in that** the prestressing device is a leaf spring (7) whose two ends adjoin the upper limiting wall of the upper of the two different planes.

3. An apparatus according to either of the above claims, **characterized in that** in the inserted state of only the lower chip card (20) the chip (21) of said card contacts with only a first read head (5).

4. An apparatus according to any of the above claims, **characterized in that** in the inserted state of both chip cards (10, 20) the chip (21) of the lower card (20) contacts with only a first read head (5) and the chip (11) of the upper card (10) contacts only with a second read head (5'), the read heads (5, 5') being spaced apart in accordance with the distance of the two back limiting walls (8, 8') disposed in different planes.

5. An apparatus according to any of the above claims, **characterized in that** in the inserted state of only the upper chip card (10) the chip (11) of said card contacts with only a first read head (5).

6. An apparatus according to any of the above claims, **characterized in that** in the inserted state of both chip cards (10, 20) the chip (11) of the upper card (10) contacts with only a first read head (5) and the chip (21) of the lower card (20) contacts only with a second read head (5'), the read heads (5, 5') being spaced apart in accordance with the distance of the two back limiting walls (8, 8') disposed in different planes.

7. An apparatus according to any of the above claims, **characterized in that** two centering elements are provided in each case for positioning the operating position of the particular chip cards (10, 20) on the two back limiting walls (8, 8') disposed in two different planes.

8. An apparatus according to claim 7, **characterized in that** the centering elements are of straight form.

9. An apparatus according to claim 7, **characterized in that** the centering elements are of bent form in accordance with the radius of curvature of the corners of an ISO IC card.

10. An apparatus according to any of the above claims, **characterized in that** guide belts are provided on the side surfaces of the apparatus for guiding the chip card in the channel (4, 4) and guiding the apparatus in the receiving shaft.

11. An apparatus according to any of claims 1 to 9, **characterized in that** the apparatus has a front area insertable into the receiving shaft of a computer, and a back area shorter than the front area, the height and the width of the back area being greater than those of the receiving shaft of the computer, and guide means for chip cards (10, 20) to be inserted into the first part being provided in the back area.

## Revendications

1. Dispositif de lecture de cartes puces (3) comportant au moins un canal de réception (4, 4') d'une carte puce présentant au moins une tête de lecture (5), ce dispositif pouvant être introduit de façon détachable dans un compartiment de réception de modules prévu dans un ordinateur, le canal de réception (4, 4') d'au moins une carte puce (10, 20) présentant deux parois de limitation arrières (8, 8') disposées dans des plans différents et à distances différentes par rapport à l'ouverture du canal (4, 4'), de façon que deux cartes puces (10, 20) disposées l'une au-dessus de l'autre peuvent être introduites dans le canal (4, 4') à différentes profondeurs,
**caractérisé par** un dispositif de précontrainte agencé de telle façon que, pendant l'introduction dans le dispositif vide, la carte puce inférieure des deux cartes puces (10, 20) sera poussée du plan supérieur des deux différents plans vers le plan inférieur, le dispositif de précontrainte étant disposé sur la paroi de limitation supérieure du plan supérieur des deux différents plans.

2. Dispositif selon la revendication 1,
**caractérisé en ce que** le dispositif de précontrainte est constitué par un ressort à lames (7) dont les deux extrémités sont adjacentes à la paroi de limitation supérieure du plan supérieur des deux différents plans.

3. Dispositif selon l'une des revendications précédentes,
**caractérisé en ce que** dans le cas où seulement la carte puce inférieure (20) est introduite le puce (21) de cette carte puce ne contacte qu'une première tête de lecture (5).

4. Dispositif selon l'une des revendications précédentes,
**caractérisé en ce que** dans le cas où toutes les deux cartes puces (10, 20) sont introduites, le puce (21) de la carte puce inférieure (20) ne contacte qu' une première tête de lecture (5) et le puce (11) de la carte puce supérieure (10) ne contacte qu'une deuxième tête de lecture (5'), les têtes de lecture (5, 5') étant écartées de façon correspondant au décalage entre les deux parois de limitation arrières (8, 8') disposées dans des plans différents.

5. Dispositif selon l'une des revendications précédentes,
**caractérisé en ce que** dans le cas où seulement la carte puce supérieure (10) est introduite le puce (11) de cette carte puce ne contacte qu'une première tête de lecture (5).

6. Dispositif selon l'une des revendications précédentes,
**caractérisé en ce que** dans le cas où toutes les deux cartes puces (10, 20) sont introduites, le puce (11) de la carte puce supérieure (10) ne contacte qu' une première tête de lecture (5) et le puce (21) de la carte puce inférieure (20) ne contacte qu'une deuxième tête de lecture (5'), les têtes de lecture (5, 5') étant écartées de façon correspondant au décalage entre les deux parois de limitation arrières (8, 8') disposées dans des plans différents.

7. Dispositif selon l'une des revendications précédentes,
**caractérisé en ce que** deux éléments de centrage sont prévus pour chacune des cartes puces (10, 20) servant à les positionner dans leurs positions de fonctionnement en correspondance des deux parois de limitation arrières (8, 8') disposées dans deux plans différents.

8. Dispositif selon la revendication 7,
**caractérisé en ce que** les éléments de centrage sont réalisés en forme rectiligne.

9. Dispositif selon la revendication 7,
**caractérisé en ce que** les éléments de centrage sont réalisés en forme courbée correspondant au rayon de courbure des coins d'une carte ISO-IC.

10. Dispositif selon l'une des revendications précédentes,
**caractérisé en ce que** des rubans de guidage sont prévus sur les surfaces latérales du dispositif lecteur, assurant le guidage de la carte puce dans le canal (4, 4') et le guidage du dispositif lecteur dans le compartiment de réception.

11. Dispositif selon l'une des revendications 1 à 9,
**caractérisé en ce que** le dispositif de lecture présente une partie avant qui peut être introduite dans le compartiment de réception d'un ordinateur ainsi qu'une partie arrière plus courte que la partie avant, l'hauteur et la largeur de la partie arrière étant respectivement supérieures à celles du compartiment de réception de l'ordinateur et la partie arrière présentant un guidage pour des cartes puces (10, 20) à introduire dans la première partie.
